# EUROPÄISCHE PATENTANMELDUNG

(11) **EP 1 589 306 A2**
(43) Veröffentlichungstag der Anmeldung: **26.10.2005**
(21) Anmeldenummer: 05008211.4
(22) Anmeldetag: 14.04.2005
(51) Int. Cl.: F25D 3/11

(54) **Verfahren und Vorrichtung zum Kühlen und/oder Gefrieren von Gegenständen**

(30) Priorität: 22.04.2004 DE 102004020180
(71) Anmelder: Linde Aktiengesellschaft, 65189 Wiesbaden (DE)
(72) Erfinder: Berghoff, Rudolf Erwin, Dr., 22088 Wedel (DE); Jagaeus, Ulf, 26040 Viken (SE)

(57) **Zusammenfassung**

Es werden ein Verfahren und eine Vorrichtung zum Kühlen und/oder Gefrieren von Gegenständen (3), insbesondere Lebensmitteln, beschrieben. Die Gegenstände (3) werden mittels eines Transportbandes (2) durch eine Behandlungszone (1) hindurchgefördert, wobei sie über Sprüheinrichtungen (4) von oben mit einem Kühlmittel besprüht werden. Um ein Abfließen von Kühlmittel nach unten zu verhindern ist unterhalb des Transportbandes (2) ein Reflektorspiegel (9) zum Auffangen von Kältemittel angebracht. Dadurch werden das Transportband (2) und die darauf befindlichen Gegenstände (3) zusätzlich von unten gekühlt.

## Beschreibung

Die Erfindung betrifft ein Verfahren zum Kühlen und/oder Gefrieren von Gegenständen, wobei die Gegenstände mittels eines Transportbandes durch eine Behandlungszone befördert werden, in der sie von oben mit einem Kühlmittel besprüht werden.

Ferner betrifft die Erfindung eine Vorrichtung zum Kühlen und/oder Gefrieren von Gegenständen mit einem in einer Behandlungszone angeordneten Transportband zum Befördern der Gegenstände durch die Behandlungszone und oberhalb des Transportbandes angebrachten Sprüheinrichtungen zum Aufsprühen von Kühlmittel auf die Gegenstände.

Zum Kühlen und/oder Gefrieren von Gegenständen, z. B. zum Haltbarmachen von Lebensmitteln oder zum Härten von Stahl oder für andere Gefügeveränderungen, werden üblicherweise Einrichtungen verwendet, bei denen die Gegenstände mittels eines Transportbandes durch eine Behandlungszone befördert werden, in der sie mit einem Kühlmittel besprüht werden. Als Kühlmittel wird meist ein Flüssiggas, insbesondere flüssiger Stickstoff oder flüssiges Kohlendioxid oder flüssiger Sauerstoff, eingesetzt. Beispielsweise geschieht das kontinuierliche Frosten von Lebensmitteln häufig in Tunnelfrostern, in denen die Lebensmittel auf einem Transportband durch den Froster bewegt werden und dabei kühlen bzw. gefrieren. Wird als Kühlmittel flüssiger Stickstoff benutzt, so sprüht man diesen z. B. im hinteren Bereich des Tunnelfrosters mittels Sprühdüsen von oben auf die zu gefrierenden Lebensmittel. Der flüssige Stickstoff verdampft vorrangig direkt auf den Lebensmitteln. Ein Teil des versprühten flüssigen Stickstoffs trifft jedoch nicht auf die Lebensmittel oder tropft von den Lebensmitteln ab. Dieser verlorene Stickstoff gelangt durch das gewöhnlich aus einem Maschenband bestehende Transportband in den unteren Teil des Tunnelfrosters, wo es wenig zur Kühlleistung beiträgt.

Der vorliegenden Erfindung liegt daher die Aufgabe zugrunde, ein Verfahren der eingangs genannten Art sowie eine Vorrichtung zur Durchführung des Verfahrens derart auszugestalten, dass das Kühlmittel besser ausgenutzt wird.

Diese Aufgabe wird verfahrensseitig erfindungsgemäß dadurch gelöst, dass von den Gegenständen abtropfendes Kühlmittel und/oder auf das Transportband aufgesprühtes Kühlmittel unterhalb des Transportbandes derart aufgefangen wird, dass das Kühlmittel die Unterseite des Transportbandes und die Gegenstände kühlt.

Vorrichtungsseitig wird die gestellte Aufgabe dadurch gelöst, dass unterhalb des Transportbandes ein Reflektorspiegel zum Auffangen von Kühlmittel angebracht ist.

Dabei beruht die Erfindung auf der Erkenntnis, dass die Effektivität einer Kühl- oder Gefriereinrichtung gesteigert werden kann, wenn die Flüssiggasverluste reduziert werden. Hierzu wird ein Reflektorspiegel vorzugsweise im Bereich der Flüssiggaseinspritzung unter dem die Gegenstände fördernden Transportband installiert. Dieser Reflektorspiegel hält das unter das Transportband gelangte Kühlmittel von unten her in Kontakt mit dem Transportband und kühlt auf diese Weise die auf dem Transportband liegenden Gegenstände von unten. Bei der Verwendung von Flüssiggas als Kühlmittel verdampft das Flüssiggas unter Abkühlung von Transportband und Gegenständen. Dadurch wird den zu kühlenden und/oder zu gefrierenden Gegenständen soviel Wärme wie möglich entzogen. Außerdem werden die Gegenstände von allen Seiten möglichst gleichmäßig gekühlt. Ungenutzt abtropfendes Kühlmittel wird also erfindungsgemäß zur Verbesserung des Kühlprozesses eingesetzt.

Besonders interessant ist die Erfindung für Kühl- oder Gefriereinrichtungen, die ein für das Kühlmittel durchlässiges Transportband, beispielsweise ein Maschenband aufweisen. Das von oben aufgesprühte Kühlmittel, welches nicht auf die zu kühlenden und/oder zu gefrierenden Gegenstände trifft, sondern durch das Transportband treten würde, wird nun vom Reflektorspiegel aufgefangen und gesammelt. Dort trägt das gesammelte Kühlmittel gezielt zur Kühlung der Gegenstände von der Unterseite der Gegenstände bei. Bei herkömmlichen Kühl- oder Gefriereinrichtungen gelangt dagegen das Kühlmittel durch das Transportband in den unteren Teil der Einrichtung, wo es mehr oder weniger ungenutzt verdampft.

Der Reflektorspiegel ist vorzugsweise als Platte ausgebildet. Je nach Aufbau der Kühl-oder Gefriereinrichtung sind auch andere Formen des Reflektorspiegels denkbar.

Um eine effektive Kühlung des Transportbandes von der Unterseite her zu gewährleisten, ist der Reflektorspiegel zweckmäßigerweise in einem Abstand von 0 mm bis 40 mm unter dem Transportband angeordnet. Sofern das Transportband an beiden Enden der Kühl- oder Gefriereinrichtung umgelenkt wird, so dass sich ein oberes, die zu kühlenden oder zu gefrierenden Gegenstände förderndes Transportband und ein unteres, rücklaufendes Transportband ergeben, ist der Reflektorspiegel unmittelbar unterhalb des oberen Transportbandes angebracht.

Zur Zufuhr des Kühlmittels sind die Sprüheinrichtungen gemäß einer besonders bevorzugten Ausführungsform mit einer Flüssiggasquelle verbunden, die insbesondere als Flüssigstickstofftank, Flüssigkohlendioxidtank oder Flüssigsauerstofftank ausgebildet ist. Gerade in Verbindung mit der Verwendung von flüssigem Stickstoff spielt die Erfindung ganz besonders ihre Vorteile aus: Pro Kilogramm eingesprühtem Stickstoff wird mehr Verdampfungsenthalpie zur Kühlung des Produktes genutzt. Der Wirkungsgrad der Kühl- oder Gefriereinrichtung verbessert sich entscheidend. Außerdem reduziert sich der spezifische Kühlmittelverbrauch (Kg-N2/Kg-Produkt).

Als weiterer positiver Effekt ist zu vermerken, dass der Reflektorspiegel einen Teil des Strömungsquerschnittes der Kühl- oder Gefriereinrichtung für die Kaltgaszirkulation schließt. Hierdurch reduziert sich die Kaltgäszirkulation im Bereich der Stickstoffeinspritzung. Es verdampft weniger Stickstoff auf dem Weg zwischen Sprühdüsen und den zu gefrierenden Gegenständen, was die zur Verfügung stehende Flüssigkeitsmenge und damit die Kühlleistung an den Gegenständen zusätzlich erhöht. Außerdem wird das Produkt nicht nur von oben (durch direktes Aufsprühen des flüssigen Stickstoffs) intensiv gekühlt, sondern jetzt auch durch die Verdampfung auf dem Reflektorspiegel unterhalb der zu gefrierenden Gegenstände von unten. Das Kühlen und/oder Frosten erfolgt deutlich gleichmäßiger, schneller und führt zu einer besseren Produkterscheinung nach dem Kühlen/Frosten.

Die Erfindung kann bei allen denkbaren Kühl- oder Gefriereinrichtungen eingesetzt werden, bei denen die zu kühlenden oder zu gefrierenden Gegenstände auf einem Transportband durch eine Behandlungszone befördert werden und ein Kühlmittel von oben auf die Gegenstände gesprüht wird. Mit besonderem Vorteil kann die Erfindung zum Kühlen oder Gefrieren von Lebensmitteln in Kühltunneln verwendet werden.

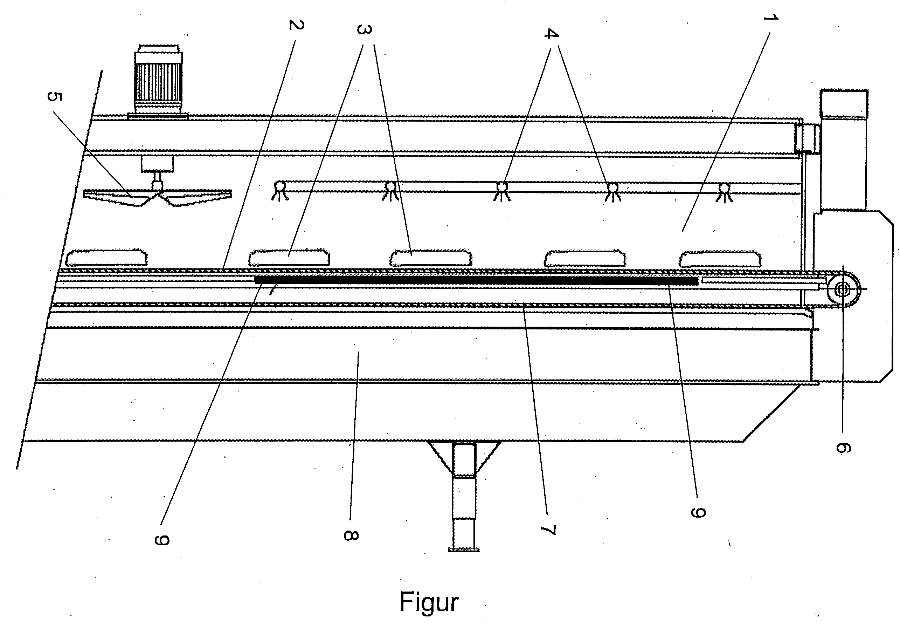

Im Folgenden soll die Erfindung anhand eines in der Figur schematisch dargestellten Ausführungsbeispiels näher erläutert werden:

In der Figur ist ein Kühltunnel zum Gefrieren von Lebensmitteln gezeigt. Der Gefriertunnel weist ein Gehäuse 1 auf, in dem ein Transportband 2 zum Fördern der Lebensmittel angeordnet ist. Die Lebensmittel 3 werden auf dem Transportband 2 liegend durch den Kühltunnel hindurch transportiert. Auf dem Weg durch den Kühltunnel werden sie mittels Flüssigstickstoffsprühdüsen 4 von oben mit flüssigem Stickstoff besprüht. Die durch Verdampfung von flüssigem Stickstoff entstehende Stickstoffgasatmosphäre innerhalb des Gehäuses 1 wird mittels eines Ventilators 5 umgewälzt. Das Transportband 2 wird am hinteren Ende des Kühltunnels über eine Umlenkrolle 6 nach unten umgelenkt und als unteres, rücklaufendes Transportband 7 zurückgeführt. Das Transportband 2 besteht aus einem Maschenband, welches für den flüssigen Stickstoff durchlässig ist. Daher gelangt von den Lebensmitteln 3 abtropfender flüssiger Stickstoff und neben den Lebensmitteln direkt auf das Transportband 2 aufgesprühter flüssiger Stickstoff durch das Transportband hindurch auf die Unterseite des Transportbandes 2. Damit der flüssige Stickstoff nicht in den unteren Teil 8 des Kühltunnels abfließt und dort ungenutzt verdampft, ist unmittelbar unterhalb des oberen Transportbandes 2 ein Reflektorspiegel 9 angebracht. Der durch das Transportband 2 hindurchdringende flüssige Stickstoff wird durch den Reflektorspiegel 9, der beispielsweise als einfache Reflektorplatte ausgebildet sein kann, aufgefangen und gesammelt, so dass die Unterseite des Transportbandes 2 mit flüssigem Stickstoff in Kontakt bleibt. Auf diese Weise ist gewährleistet, dass das Transportband 2 und somit die Lebensmittel 3 zusätzlich von unten gekühlt werden.

## Patentansprüche

1. Vorrichtung zum Kühlen und/oder Gefrieren von Gegenständen (3) mit einem in einer Behandlungszone (1) angeordneten Transportband (2) zum Befördern der Gegenstände (3) durch die Behandlungszone (1) und oberhalb des Transportbandes (2) angebrachten Sprüheinrichtungen (4) zum Aufsprühen von Kühlmittel auf die Gegenstände (3), **dadurch gekennzeichnet, dass** unterhalb des Transportbandes (2) ein Reflektorspiegel (9) zum Auffangen von Kältemittel angebracht ist.

2. Vorrichtung nach Anspruch 1, **dadurch gekennzeichnet, dass** der Reflektorspiegel (9) als Platte ausgebildet ist.

3. Vorrichtung nach Anspruch 1 oder 2; **dadurch gekennzeichnet, dass** der Reflektorspiegel (9) in einem Abstand von 0 mm bis 40 mm unter dem Transportband (2) angeordnet ist.

4. Vorrichtung nach einem der Ansprüche 1 bis 3, **dadurch gekennzeichnet, dass** das Transportband (2) als Maschenband ausgebildet ist.

5. Vorrichtung nach einem der Ansprüche 1 bis 4, **dadurch gekennzeichnet, dass** die Sprüheinrichtungen (4) mit einer Flüssiggasquelle, insbesondere einem Flüssigstickstofftank, in Verbindung stehen.

6. Verfahren zum Kühlen und/oder Gefrieren von Gegenständen, wobei die Gegenstände (3) mittels eines Transportbandes (2) durch eine Behandlungszone (1) befördert werden, in der sie von oben mit einem Kühlmittel besprüht werden, **dadurch gekennzeichnet, dass** von den Gegenständen (3) abtropfendes Kühlmittel und /oder auf das Transportband (2) aufgesprühtes Kühlmittel unterhalb des Transportbandes (2) derart aufgefangen wird, dass das Kühlmittel die Unterseite des Transportbandes (2) und die Gegenstände (3) kühlt.
